(19) **Europäisches Patentamt**

**European Patent Office**

**Office européen des brevets**

(11) **EP 0 614 518 B1**

(12) **EUROPEAN PATENT SPECIFICATION**

(45) Date of publication and mention
of the grant of the patent:
**07.08.1996 Bulletin 1996/32**

(21) Application number: **93900828.0**

(22) Date of filing: **24.11.1992**

(51) Int Cl.6: **G01C 19/72**, G02B 6/44

(86) International application number:
**PCT/US92/10434**

(87) International publication number:
**WO 93/11406 (10.06.1993 Gazette 1993/14)**

(54) **FIBER OPTIC WINDING**

GLASFASERWICKLUNG

ENROULEMENT DE FIBRES OPTIQUES

(84) Designated Contracting States:
**DE FR GB IT NL SE**

(30) Priority: **25.11.1991 US 797342**
         **04.09.1992 US 940974**

(43) Date of publication of application:
**14.09.1994 Bulletin 1994/37**

(60) Divisional application: **95116673.5**

(73) Proprietors:
• **HONEYWELL INC.**
  **Minneapolis Minnesota 55408 (US)**
• **BERGH, Ralph A.**
  **Phoenix, AZ 85022 (US)**

(72) Inventors:
• **BERGH, Ralph, A.**
  **Phoenix, AZ 85022 (US)**
• **GOETTSCHE, Randy, P.**
  **Phoenix, AZ 85027 (US)**

(74) Representative: **Rentzsch, Heinz, Dipl.-Ing. et al**
  **Honeywell Holding AG**
  **Patent- und Lizenzabteilung**
  **Postfach 10 08 65**
  **63008 Offenbach (DE)**

(56) References cited:
  **EP-A- 0 292 103       US-A- 4 781 461**
  **US-A- 4 856 900**

• **PATENT ABSTRACTS OF JAPAN vol. 12, no. 240
  (P-727)(3087) 8 July 1988 & JP-A-63 33 612
  (TOSHIBA) 13 February 1988.**
• **PATENT ABSTRACTS OF JAPAN vol. 14, no. 101
  (P-1012)(4044) 23 February 1990 & JP-A-13 05
  310 (JAPAN AVIATION ELECTRON IND LTD) 8
  December 1989.**

**Description**

The present invention relates to fiber optic coils and, more particularly, to fiber optic coils used in rotation sensors, as may be used for an advanced global positioning and inertial guidance system.

Optical rotation sensing devices include ring laser gyros, fiber optic rotation sensors, and the like. The fiber optic rotation sensor ordinarily used comprises an interferometer which includes a light source, a beam splitter, a detector, and a light path which is mounted on a rotatable platform. Light from the light source is split by the beam splitter into two beams which are directed to opposite ends of the optical path and which then counterpropagate around that path. The light beams exit the light path, the light beams are recombined, and the resulting combined light beam is sensed by a detector. A sensing circuit connected to the detector determines any phase difference between the counterpropagating light beams.

Assuming that this fiber optic rotation sensor experiences no rotation, ideally no difference in phase between the counterpropagating light beams will be detected. On the other hand, if the sensor experiences rotation, there will be a phase difference between the counterpropagating light beams which can be detected to indicate the extent and direction of rotation.

In a fiber optic rotation sensor, an optical fiber is coiled, usually in multiple layers, around a spool, with each layer containing multiple turns. Currently, such coils are typically wound as quadrupoles. In order to form a quadrupole coil, each half of a continuous optical fiber is first wound onto respective intermediate spools. The first spool is then used to wind a first layer of turns in a clockwise direction around a sensor spool. This first layer is wound around the sensor spool from the first end to the second end of the sensor spool. The second spool is then used to wind a second layer of turns in a counter-clockwise direction around a sensor spool. This second layer is wound around the sensor spool from the first end to the second end of the sensor spool. The fiber on the second spool is then wound back from the second end to the first end of the sensor spool to form a third layer. The first spool is then used to wind a fourth layer of turns from the second end of the spool to the first end. Thus, one half (i.e. one end) of the optical fiber is used to form the first and fourth layers of turns and the other half (i.e. the other end) is used to form the second and third layers. These four layers of turns are usually referred to as a quadrupole. If "+" and "-" are used to designate the first and second halves or ends of the optical fiber respectively, this quadrupole is wound with + - - + layers. The quadrupole is repeated for as many layers as is desired for the optical path. Accordingly, a second quadrupole will be wound with + - - + layers about the first quadrupole so that the resulting two quadrupole arrangement will have a + - - + + - - + layer configuration.

When a fiber optic coil wound in this fashion is subjected to an axial and/or radial time varying temperature gradient, there will be a phase difference between the counterpropagating light beams which results in a false indication of rotation; that is, this phase difference is an error which produces a false indication of rotation.

Summary of the Invention

This error can be substantially reduced by employing reverse quadrupoles for the sensor coil. One of the first quadrupoles is wound using the first end of the fiber to wind the first layer, the second end to wind the second and the third layers, and the first end to wind the fourth layer. An adjacent quadrupole is then wound by reversing the winding sequence; that is, the second end of the fiber is used to wind the fifth layer, the first end to wind the sixth and seventh layers, and the second end to wind the eighth layer. These two reverse quadrupoles are referred to herein as an octupole. This octupole materially reduces axial time varying temperature gradient dependent errors and substantially eliminates radial time varying temperature gradient dependent errors. Accordingly, an octupole with + - - + - + + - layers results in a marked improvement over prior art coils.

The axial time varying temperature gradient dependent errors can be substantially eliminated by winding a reverse octupole. Accordingly, in a particular embodiment of the invention additionally a ninth layer is wound using the second end, the tenth and eleventh layers are wound using the first end, the twelfth layer is wound using the second end, the thirteenth layer is wound using the first end, the fourteenth and fifteenth layers are wound using the second end and the sixteenth layer is wound using the first end. This reversed octupole arrangement is wound with + - - + - + + - - + + - + - - + winding configuration for a total of 16 layers.

Alternatively, axial time varying temperature gradient dependent errors can be substantially eliminated by axially displacing extra lengths of the first and second ends from one another. For example, after the above octupole coil is wound, in a particular embodiment of the invention extra turns of the first and second ends may be wound around the octupole outer circumference so that the extra turns of the first end are axially displaced from the extra turns of the second end. The number and placement of these extra turns may be selected to eliminate these errors.

<u>Brief Description of the Drawings</u>

These features will become more apparent from a detailed consideration of the invention when taken in junction with the drawings in which:

Figure 1 shows a prior art fiber optic coil arrangement;

Figure 2 shows an arrangement for substantially eliminating axial time varying temperature gradient dependent errors of the prior art coil arrangement shown in Fig. 1;

Figure 3 shows a reverse quadrupole fiber optic coil arrangement;

Figure 4 shows a reverse quadrupole fiber optic coil having trimming turns around the outside circumference thereof in order to substantially eliminate axial time varying temperature gradient dependent errors;

Figure 5 shows a sixteen layer reverse octupole device which substantially eliminates axial and radial time varying temperature gradient dependent errors;

Figure 6 is a table showing the zero net axial time varying temperature gradient dependent error of the sixteen layer reverse octupole device;

Figure 7 is a table showing the zero net radial time varying temperature gradient dependent offset of either a reverse quadrupole or a reverse octupole device; and,

Figure 8 shows an optical fiber useful in winding the coil according to the present invention.

<u>Detailed Description</u>

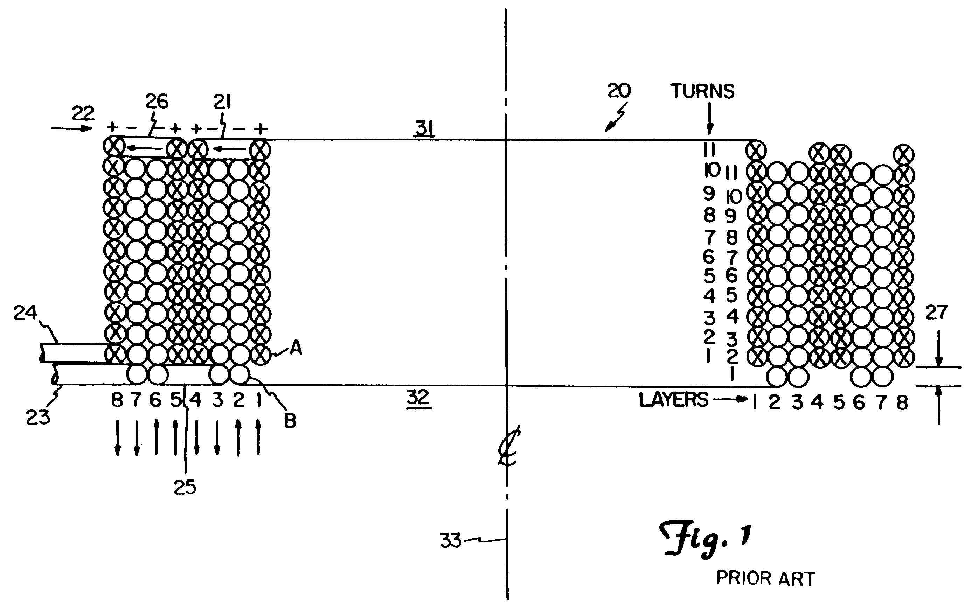

Shown in Figure 1 is a typical quadrupole of the type disclosed in U.S. Pat. No. 4,856,900 or of the type shown in Japanese patent application 61-176805 (document JP-A-63-33612). As shown in Figure 1, this typical quadrupole fiber optic coil 20 is wound using the ends of a continuous optical fiber, such as the optical fiber shown in Figure 8. Accordingly, layer 1 is wound clockwise from near the middle A/B of the fiber E using first end C. Layer 1 is wound in an upward direction as viewed in Figure 1, i.e. each turn in the layer is formed above its preceding turn. When the desired number of turns of layer 1 are wound, layer 2 is wound counterclockwise from near the middle A/B of the fiber E using second end D. Layer 2 is wound in an upward direction as viewed in Figure 1. At end 31 of coil 20, counterclockwise winding of the second end D continues in a downward direction to wind layer 3. The first end C is bridged over to layer 4 by way of loop 21 and layer 4 is wound clockwise in the downward direction. Layer 5 is wound clockwise, using the first end C, in the upward direction. The second end D of the fiber E is bridged from layer 3 to layer 6 by way of loop 25 and layers 6 and 7 are wound counterclockwise in the directions of the arrows. The first end C of the fiber E is bridged from layer 5 to layer 8 by way of loop 26 and layer 8 is wound clockwise in the direction of the arrow from end 31 to end 32 of coil 20. As can be seen in Figure 1, the turns with the "X" indicate the first end C of the fiber which is wound in one of the clockwise or counterclockwise directions and the turns without the "X" indicate the second end D of the fiber which is wound in the other of the clockwise or counterclockwise directions. These layers, for convenience, are indicated with "+" and "-" symbols at 22 in order to indicate which end of the fiber is used to wind the layer as well as the relative direction of winding. Layers 1-4 form a first quadrupole and layers 5-8 form a second quadrupole. As shown in Figure 1, the two quadrupoles have the same + - - + winding configuration.

As the arrows in Figure 8 indicate, winding of layers 1 and 2 begins near the middle A/B of the fiber and proceeds, in the direction of the Figure 8 arrows, from the middle A/B toward extremities 24 and 23 respectively. Extremity 23 of the second end D of the fiber is brought out of coil 20 and extremity 24 of the first end C of the fiber is also brought out of coil 20. Two light beams, which are used to counterpropagate along the path provided by the optical fiber E, are injected into respective extremities 23 and 24. One light beam, injected into extremity 23, propagates in order through layers 7, 6, 3, 2, 1, 4, 5 and 8 to exit extremity 24. The other light beam, injected into extremity 24, counterpropagates in order through layers 8, 5, 4, 1, 2, 3, 6 and 7 to exit extremity 23. The exiting light beams are recombined and are sensed by a detector so that the phases can be compared.

As can be seen from the right-hand side of Figure 1, because of the way in which quadrupole fiber optic coils are wound, the "+" and "-" layers are offset by an axial distance 27. As a result of the winding process, this axial distance can be one fiber diameter as shown, a fraction of a fiber diameter, or several fiber diameters. Because of this axial spatial offset, if an axial time varying thermal gradient is applied to the fiber optic coil, turns of the "+" layers see a slightly different rate of temperature change than do the corresponding turns of the "-" layers. That is, turn 1 of layer 1 is offset from turn 1 of layer 2 by the amount 27, turn 2 of layer 1 is offset from turn 2 of layer 2 by the amount, and so on. It can be seen that, because the "-" half of the coil is spatially offset from the "+" half of the coil, there is a slightly different rate of temperature change that is experienced by the counter-propagating light beams travelling through corresponding turns of the "+" and "-" halves of the coil. (The coil halves of coil 20 are (1) all of the "+" turns which are wound in the clockwise direction and (2) all of the "-" turns are wound in the counterclockwise direction). Consequently, the counterpropagating light beams travel through different path lengths, which results in a phase difference between the light beams. This phase difference is defined herein as an error because it is not related to rotation of the rotation sensor.

The time varying temperature gradient can be given by the following equation:

$$\frac{\Delta'\perp'_{ax}}{\Delta t} = \frac{\Delta'\perp'_{31}}{\Delta t} - \frac{\Delta'\perp'_{32}}{\Delta t} \tag{1}$$

where $\Delta T_{31}/\Delta t$ is the rate of temperature change at end 31 of the coil, $\Delta T_{32}/\Delta t$ is the rate of temperature change at end 32 of the coil, and $\Delta T_{ax}/\Delta t$ is the axial difference between the rates of temperature change at the two ends of the coil. The difference d in the rates of temperature change between corresponding turns of the "+" and "-" layers (which are separated by distance 27) is $\Delta T_{ax}/\Delta t$ divided by the number of turns in a layer. Although this difference d is quite small, the effect of this small difference accumulates over an entire coil half and becomes relatively large. The accumulation of this effect over the entire coil produces a phase difference between the counterpropagating beams which will result in a relatively large false indication of rotation.

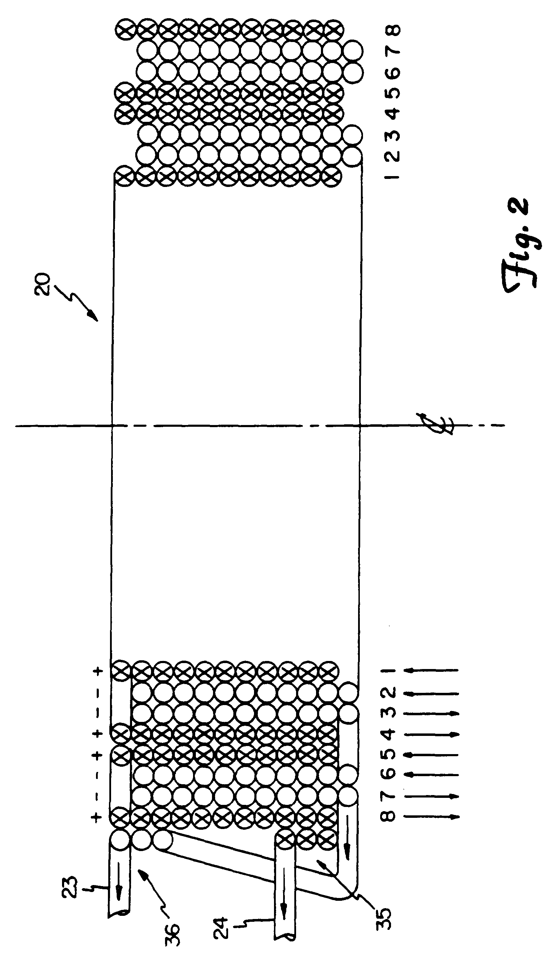

One manner of reducing this axial time varying temperature gradient dependent error is to axially displace extra lengths of the first and second ends of the fiber from one another. For example, as shown in Figure 2, after layer 8 has been wound with the "+" end of the fiber, the "+" end of the fiber is wound around the outside diameter of coil 20 by a predetermined number of turns 35. Similarly, the "-" end of the fiber is wound around the outside diameter by a predetermined number of turns 36. The extra turns 35 and 36 are axially displaced from one another. The predetermined number of trimming turns 35 and 36 can be selected to minimize the error resulting from the axial time varying temperature gradient experienced by the coil 20. Specifically, light beams can be injected into extremities 23 and 24 with coil 20 mounted on a stationary, stable platform and an axial time varying temperature gradient can be applied to the coil. The counterpropagating light beams exiting extremities 23 and 24 can be combined and the phase difference sensed. Turns 35 and 36 can then be wound until the error, which results from an axial time varying temperature gradient acting on the spatial displacement of the two halves of the coil, is minimized.

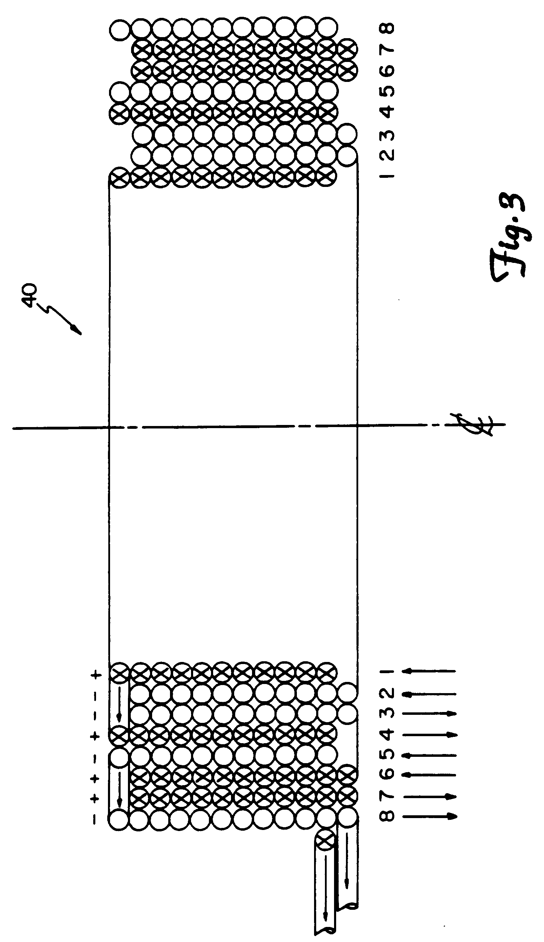

Alternatively, axial time varying temperature gradient dependent errors can be materially reduced if the coil 40 as shown in Figure 3 is wound using reversed quadrupoles. That is, the quadrupole comprising layers 1-4 is wound with a + - - + layer configuration whereas the second quadrupole comprising layers 5-8 is wound with a - + + - layer configuration. Specifically, the "+" end of the optical fiber, starting near the middle A/B of the fiber E, is used to wind layer 1, the "-" end is used to wind layers 2 and 3, and the "+" end is used to wind layer 4, the "-" end is used to wind layer 5, the "+" end is use to wind layers 6 and 7, and the "-" end is used to wind layer 8. Layers 1, 4, 6 and 7 may be wound in the clockwise direction and layers 2, 3, 5 and 8 may be wound in the counterclockwise direction. It can be seen that the spatial axial offset with respect to the "+" and "-" layers of the first quadrupole (layers 1-4) is reversed with respect to the "+" and "-" layers of the second quadrupole (layers 5-8). The axial sensitivity to time varying temperature gradients is reduced because the spatial asymmetry with respect to the "+" and "-" halves of the coils shown in Figs. 1 and 2 is eliminated. Thus, although the error resulting from an axially oriented time varying temperature gradient has not been eliminated, it has been materially reduced and in many cases is tolerable. Moreover, error resulting from a radially oriented time varying temperature gradient is substantially eliminated.

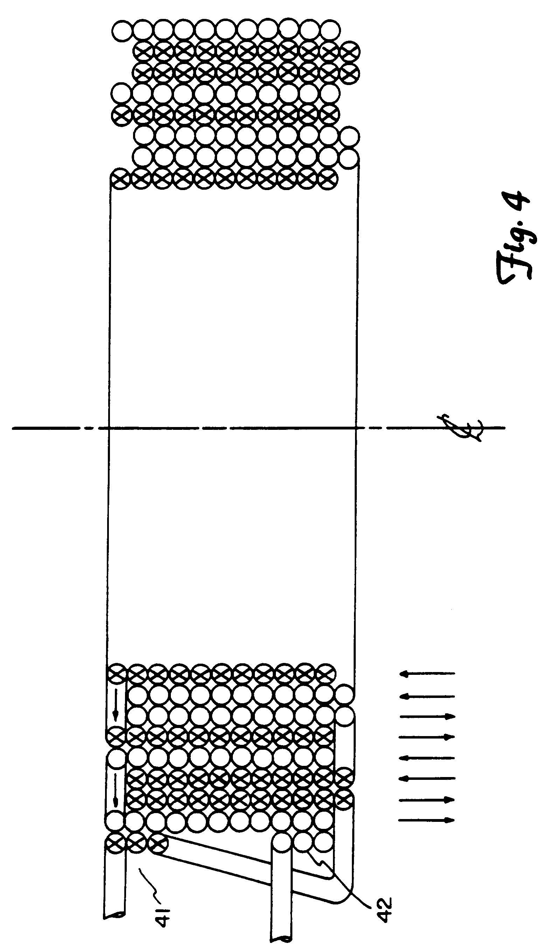

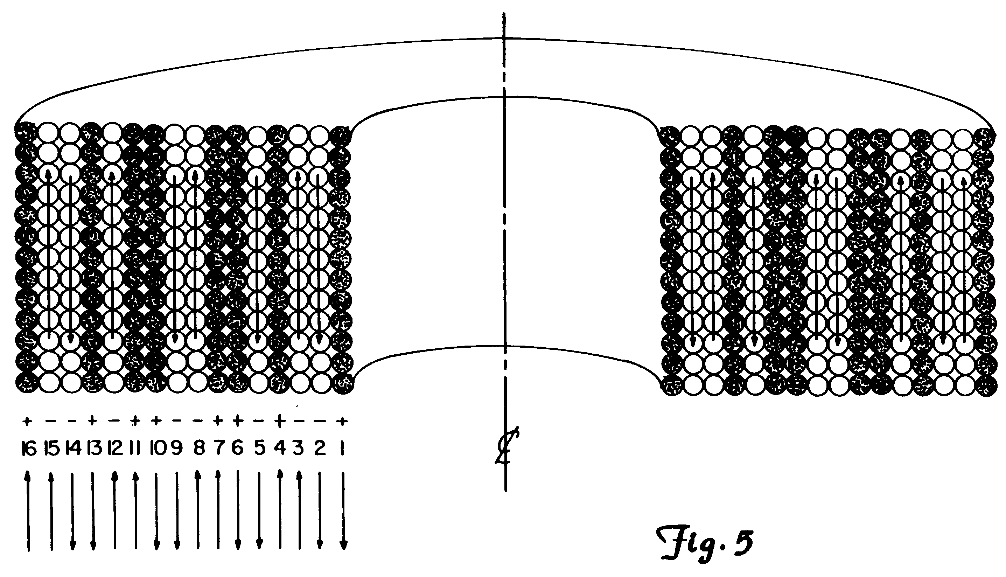

This reduced error resulting from an axially oriented time varying temperature gradient can be substantially eliminated either by the trimming turns 41 and 42 shown in Figure 4 or by a reverse octupolar arrangement such as that shown in Figure 5.

In Figure 5, coil 50 is comprised of a quadrupole including layers 1-4 having a + - - + layer configuration and a quadrupole comprising layers 5-8 having a reverse layer configuration, i.e. - + + -. Thus, layers 1-8 form an octupole comprised of two reversely wound quadrupoles. Axially dependent time varying temperature errors can be substantially eliminated by adding a second reverse octupole comprising layers 9-16. This second octupole has a quadrupole comprising layers 9-12 wound with a - + + - layer configuration and a quadrupole comprising layers 13-16 wound with a + - - + layer configuration.

Accordingly, layer 1 is wound clockwise, in this case beginning at the top of coil 50, with the "+" end of an optical fiber. Layers 2 and 3 are wound counterclockwise in the direction of the arrows from the "-" end. The fourth layer is wound clockwise from the "+" end of the fiber in the direction of the arrow, the fifth layer is wound counterclockwise from the "-" end of fiber in the direction of the arrow and layers 6 and 7 are wound clockwise from the "+" end of the fiber in the direction of the arrows. The eighth and ninth layers are wound counterclockwise from the "-" end of the fiber in the direction of the arrows, and so on. By reversing the octupoles, the error resulting from the axially applied time varying temperature gradient is substantially eliminated.

This sixteen layer reverse octupole arrangement likewise substantially eliminates radial time varying temperature gradient dependent errors since it is simply two octupolar layers back-to-back, i.e. reversed octupolar layers. However, the reversed octupolar arrangement improves on the axial symmetry and substantially eliminates axial time varying temperature gradient dependent errors.

Varying thermal gradient dependent errors in indicated rotation rate from an Interferometric Fiber Optic Gyro (IFOG) can be described with the following equation:

$$\Omega_e = \frac{nN\pi}{L^2} \frac{\Delta n}{\Delta T} \int_0^L \frac{\Delta T(l)}{\Delta t} (2l - L) \, dl$$

where "$\Omega_e$" is the erroneously indicated rotation rate, "n" is the index of refraction of the optical fiber, "N" is the total number of turns in the fiber optic sensing loop, "L" is the total length of the fiber optic sensing loop wherein the length of the fiber optic sensing loop includes the length of the fiber optic coil and the length of the optical leads between the beam splitter and the fiber optic coil, "$\Delta n/\Delta T$" is the thermal coefficient of "n", "1" is a variable indicating position along the fiber optic sensing loop, and "$\Delta T(1)/\Delta t$" is the function describing the change of temperature "T" over the length of the fiber optic sensing loop. Transforming equation (2) to a layer-by-layer summation and neglecting the typically short fiber optic leads that join the fiber optic coil to the beam splitter results in the following equation:

$$\Omega_e = \frac{nN\pi}{L^2} \frac{\Delta n}{\Delta T} \sum_{i=1}^{m} \int_{l_1(i)}^{l_2(i)} \frac{\Delta T(i)}{\Delta t} (2l - L) \, dl$$

where "i" is a variable indicating layer number, "m" is the number of layers in the fiber optic coil, "$l_1(i)$" is the length from the start of the fiber optic coil to the beginning of layer "i", "$l_2(i)$" is the length from the start of the fiber optic coil to the end of layer "i", and "$\Delta T(i)/\Delta t$" is the function describing the rate of temperature change of layer "i". The factors $l_1(i)$ and $l_2(i)$ can be given by the following equations:

$$l_1(i) = \frac{L}{m} (i-1) \tag{4}$$

and

$$l_2(i) = \frac{L}{m} i \tag{5}$$

(It may be noted that these equations define equal lengths of fiber in each layer. In practice, this is a sufficiently accurate assumption and more easily illustrates the benefits of this invention.)

Performing the integration of equation (3) results in the following equation:

$$\Omega_e = \frac{nN\pi}{m^2} \frac{\Delta n}{\Delta T} \sum_{i=1}^{m} \frac{\Delta T(i)}{\Delta t} (2i - m - 1) \tag{6}$$

The first factor after the summation sign in equation (6) describes the changing temperature as a function of layer and the second parenthetical factor in equation (6) describes the weighting factor given each layer which is dependent on its position from the beginning of the coil.

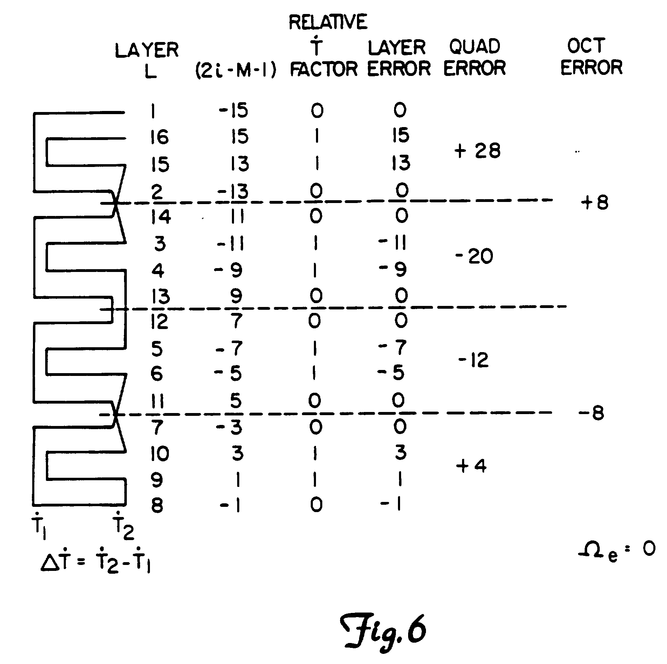

The table shown in Figure 6 gives an example of equation (6) and, therefore, of the canceling effect with regard to axial time varying temperature gradient effects in a sixteen layer device such as the one shown in Figure 5. Figure 6 schematically shows, along side the first column of numbers, the position along the length of the fiber of each layer within the coil. It should be noted that the layers shown in Figure 6 have been assigned layer numbers which are different than the layer numbers shown in Figure 5. The layer numbers of Figure 6 show the position of each layer along the fiber length as seen by one of the light beams propagating therethrough. Thus, layer 1 shown in Figure 6 corresponds to the outermost layer 16 shown in Figure 5, layer 16 shown in Figure 6 corresponds to the next outermost layer 15 shown in Figure 5, and so on.

The first column of numbers in Figure 6 contains the layer numbers for the sixteen layers of a coil wound in a - + + - + - - + + - - + - + + - configuration as indicated by the second column of Figure 6. The second column contains weighting factors which depend upon the length of the fiber from the middle A/B of the fiber to the midpoint of the fiber in its respective layer and has a polarity corresponding to which end of the fiber is used to wind that corresponding layer. The third column shows temperature dependent factors, i.e. those factors in equation (6) dependent upon an axially applied time varying temperature gradient.

The fourth column of numbers in Figure 6 represents the axial time varying temperature gradient error of each layer and results from multiplying the values in the second column by the corresponding value in the third column. The fifth column represents the accumulated error for each quadrupole of the layers shown at the left-hand side of Figure 6. The last column of Figure 6 shows the accumulated octupolar errors for each octupole.

As can be seen from Figure 6, each quadrupole has a fairly sizable error as a result of the axial time varying temperature gradient which is applied to the sixteen layer coil. These errors will all be positive and will accumulate in a standard + - - + + - - + configuration. However, the net octupolar error resulting from a first quadrupole having a + - - + configuration and a reversed quadrupole having a - + + - configuration reduces the error dramatically. This error can be substantially eliminated by using a reversed octupole as shown by the lower eight layers of Figure 6. Accordingly, the first octupole gives an accumulated axial time varying temperature gradient dependent error of +8 while the second eight layers of the coil produce an accumulated time varying temperature gradient dependent error of -8. Because of the way in which the layers are wound with the - + ++ - - + + - - + - + + - layer configuration, these octupolar errors cancel one another out leaving a substantially zero axial time varying temperature gradient dependent error.

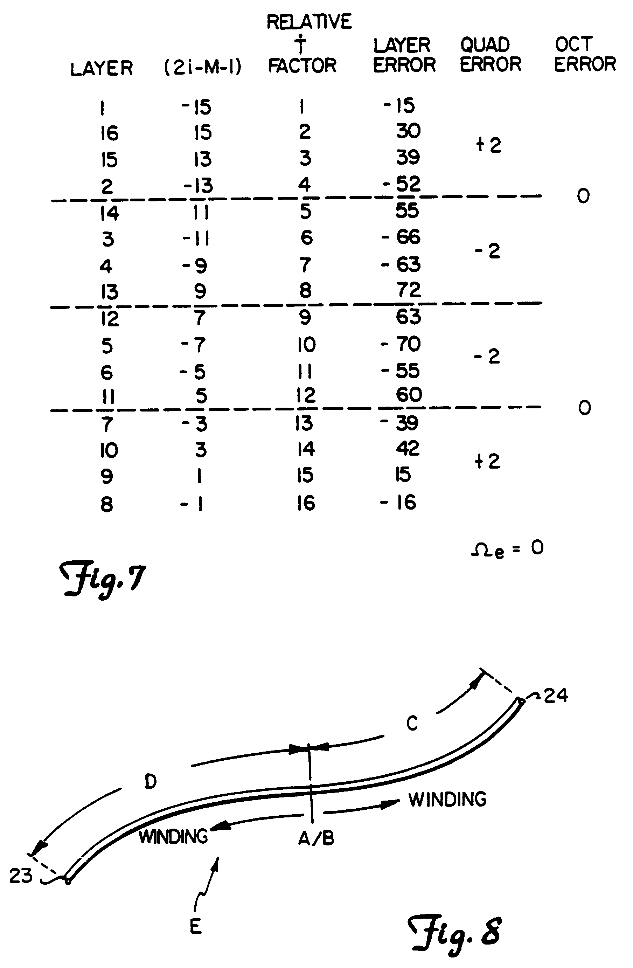

Figure 7 is a table showing representative values with respect to a radial time varying temperature gradient applied to a coil such as the coil of Figure 5. Because the time varying temperature gradient is applied radially, the temperature factors in the third column will change linearly with regard to each layer. The fourth column of Figure 7 shows the error of each layer whereas the fifth column shows the accumulated error for each quadrupole and the last column shows the accumulated error for each octupolar portion of the coil. As can be seen, only an eight layer coil is needed to substantially eliminate radial time varying temperature gradient dependent errors.

Accordingly, the present invention substantially eliminates errors due to both axial time varying temperature gradients and radial time varying temperature gradients. Thus, the need for a temperature stable environment for the fiber optic coil arrangement has been materially reduced.

The "+" and "-" symbols have been used to denote the difference between a layer wound from one end of the optical fiber and a layer wound from the other end of the optical fiber. Thus, in an octupolar winding arrangement, the first quadrupole can be wound with a + - - + layer configuration and the second quadrupole can be wound with a - + + - layer configuration or the first quadrupole can be wound with a - + + - layer configuration and the second quadrupole can be wound with a + - - + layer configuration. Furthermore, the a sixteen layer arrangement may-have a + - - + - + + - - + + - + - - + layer con-figuration or a - + + - + - - + + - - + - + + - layer configuration.

## Claims

1. A fiber optic coil comprising:

   a) a first layer (1) of turns;
   b) a second layer (2) of turns overlying said first layer of turns;
   c) a third layer (3) of turns overlying said second layer of turns;
   d) a fourth layer (4) of turns overlying said third layer of turns; wherein
   e) said fiber optic coil (20) is wound from an optical fiber (E) having first (24) and second (23) ends; and
   f) said first (1) and fourth (4) layers are wound from said first end (24) of said optical fiber and said second (2) and third (3) layers are wound from said second end (23) of said optical fiber; **characterized by** :
   g) a fifth layer (5) of turns overlying said fourth layer of turns;
   h) a sixth layer (6) of turns overlying said fifth layer of turns;
   i) a seventh layer (7) of turns overlying said sixth layer of turns; and,
   j) an eighth layer (8) of turns overlying said seventh layer of turns; wherein
   k) said sixth and seventh layers are wound from said first end (24) of said optical fiber; and
   l) said fifth and eighth layers are wound from said second end (23) of said optical fiber.

2. The fiber optic coil of claim 1, **characterized in that** said first (1), fourth (4), sixth (6) and seventh (7) layers of said fiber optic coil (20) comprise turns all of which are wound in either a clockwise or a counterclockwise direction and wherein said second (2), third (3), fifth (5) and eighth (8) layers of said fiber optic coil comprise turns all of which are wound in the other of said directions.

3. The fiber optic coil of claim 1 or 2, **characterized by** a first extra length (35, 42) of said first end (24) and a second extra length (36, 41) of said second end (23), said first and second extra lengths being spatially displaced from one another and being arranged so that error between phases of light counterpropagating through said fiber is reduced.

4. The fiber optic coil of claim 1 or 2, **characterized in that** said fiber optic coil (20) has an inside perimeter and an outside perimeter and wherein said fiber optic coil further comprises a first number of turns (35, 42) of said first end (24) wound around said outside perimeter and a second number of turns (36, 41) of said second end (23) wound around said outside perimeter, said first and second number of turns and placement of said first and second number of turns being selected to reduce error between phases of light counterpropagating through said fiber.

5. The fiber optic coil of one of the preceding claims, **characterized in that** said coil has an integer number of sections, each section comprising said first (1), second (2), third (3), fourth (4), fifth (5), sixth (6), seventh (7), and eighth (8) layers.

6. The fiber optic coil of one of the preceding claims, **characterized by** :

   a) a ninth layer (9) of turns formed of said second end (23) of said optical fiber (E), said ninth layer of turns overlying said eighth layer (8) of turns;

   b) a tenth layer (10) of turns formed of said first end (24) of said optical fiber, said tenth layer of turns overlying said ninth layer (9) of turns;

   c) an eleventh layer (11) of turns formed of said first end (24) of said optical fiber, said eleventh layer of turns overlying said tenth layer (10) of turns;

   d) a twelfth layer (12) of turns formed of said second end (23) of said optical fiber, said twelfth layer of turns overlying said eleventh layer (11) of turns;

   e) a thirteenth layer (13) of turns formed of said first (24) end of said optical fiber, said thirteenth layer of turns overlying said twelfth layer (12) of turns;

   f) a fourteenth layer (14) of turns formed of said second end (23) of said optical fiber, said fourteenth layer of turns overlying said thirteenth layer (13) of turns;

   g) a fifteenth layer (15) of turns formed of said second end (23) of said optical fiber, said fifteenth layer of turns overlying said fourteenth layer (14) of turns; and,

   h) a sixteenth layer (16) of turns formed of said first end (24) of said optical fiber, said sixteenth layer of turns overlying said fifteenth layer (15) of turns.

7. The fiber optic coil of claim 6, **characterized in that** said first (1), fourth (4), sixth (6), seventh (7), tenth (10), eleventh (11), thirteenth (13) and sixteenth (16) layers comprise turns all of which are wound in either a clockwise or a counterclockwise direction and wherein said second (2), third (3), fifth (5), eighth (8), ninth (9), twelfth (12), fourteenth (14) and fifteenth (15) layers comprise turns all of which are wound in the other of said directions.

8. A method of winding an optical coil comprising the steps of

   a) forming a first layer (1) of turns from an optical fiber (E) having first (24) and second (23) ends;

   b) forming a second layer (2) of turns from said optical fiber overlying said first layer of turns;

   c) forming a third layer (3) of turns from said optical fiber overlying said second layer of turns;

   d) forming a fourth layer (4) of turns from said optical fiber overlying said third layer of turns; wherein

   e) said first (1) and fourth (4) layers are wound from said first end (24) of said optical fiber and said second (2) and third (3) layers are wound from said second end (23) of said optical fiber; **characterized by** :

   f) forming a fifth layer (5) of turns from said optical fiber overlying said fourth layer of turns;

   g) forming a sixth layer (6) of turns from said optical fiber overlying said fifth layer of turns;

   h) forming a seventh layer (7) of turns from said optical fiber overlying said sixth layer of turns; and,

   i) forming an eighth layer (8) of turns from said optical fiber overlying said seventh layer of turns;

   j) winding said first layer (1) of turns from a first end (24) of said optical fiber (E) from a first coil end to a second coil end of the optical coil;

   k) winding said second layer (2) of turns from a second end (23) of said optical fiber from said first coil end to said second coil end;

   l) winding said third layer (3) of turns from said second end (23) of said optical fiber from said second coil end to said first coil end;

   m) winding said fourth layer (4) of turns from said first end (24) of said optical fiber from said second coil end to said first coil end;

   n) winding said fifth layer (5) of turns from said second end (23) of said optical fiber from said first coil end to said second coil end;

   o) winding said sixth layer (6) of turns from said first end (24) of said optical fiber from said first coil end to said second coil end;

   p) winding said seventh layer (7) of turns from said first end (24) of said optical fiber from said second coil end to said first coil end; and

   q) winding said eighth layer (8) of turns from said second end (23) of said optical fiber from said second coil end to said first coil end.

9. The method of claim 8, wherein said turns may be wound in either a clockwise or a counterclockwise direction and wherein said turns of said first (1), fourth (4), sixth (6) and seventh (7) layers are wound in one of said directions and said turns of said second (2), third (3), fifth (5) and eighth (8) layers are wound in the other of said directions.

10. The method of claim 8 or 9, wherein a first extra length (35, 42) of said first end (24) and a second extra length (36, 41) of said second end (23) are spatially displaced from one another and are arranged so that error between phases of light counterpropagating through said fiber is reduced.

11. The method of claim 8 or 9, wherein said coil (20) has an outside perimeter and wherein a first number of turns (35, 42) of said first end (24) are wound around said outside perimeter and a second number of turns (36, 41) of said second end (23) are wound around said outside perimeter, said first and second number of turns and placement of said first and second number of turns being selected to reduce error between phases of light counterpropagating through said fiber.

12. The method of one of the claims 8 to 11, **characterized in that** said method further comprises the steps of:

    a) forming a ninth layer (9) of turns by winding said second end (24) of said optical fiber (E) around said eighth layer (8) from said first coil end to said second coil end;
    b) forming a tenth layer (10) of turns by winding said first end (24) of said optical fiber around said ninth layer (9) from said first coil end to said second coil end;
    c) forming an eleventh layer (11) of turns by winding said first end (24) of said optical fiber around said tenth layer (10) from said second coil end to said first coil end;
    d) forming a twelfth layer (12) of turns by winding said second end (23) of said optical fiber around said eleventh layer (11) from said second coil end to said first coil end;
    e) forming a thirteenth layer (13) of turns by winding said first end (24) of said optical fiber around said twelfth layer (12) from said first coil end to said second coil end;
    f) forming a fourteenth layer (14) of turns by winding said second end (23) of said optical fiber around said thirteenth layer (13) from said first coil end to said second coil end;
    g) forming a fifteenth layer (15) of turns by winding said second end (23) of said optical fiber around said fourteenth layer (14) from said second coil end to said first coil end; and,
    h) forming a sixteenth layer (16) of turns by winding said first end (24) of said optical fiber around said fifteenth layer (15) from said second coil end to said first coil end.

13. The method of claim 12, wherein said turns may be wound in either a clockwise or a counterclockwise direction and wherein said turns of said first (1), fourth (4), sixth (6), seventh (7), tenth (10), eleventh (11), thirteenth (13) and sixteenth (16) layers are wound in one of said directions and said turns of said second (2), third (3), fifth (5), eighth (8), ninth (9), twelfth (12), fourteenth (14) and fifteenth (15) layers are wound in the other of said directions.

**Patentansprüche**

1. Eine faseroptische Spule mit:

    a) einer ersten Lage (1) von Windungen;
    b) einer zweiten Lage (2) von Windungen über der ersten Windungslage;
    c) einer dritten Lage (3) von Windungen über der zweiten Windungslage;
    d) einer vierten Lage (4) von Windungen über der dritten Windungslage; wobei
    e) die faseroptische Spule (20) aus einer optischen Faser (E) gewickelt ist, welche ein erstes Ende (24) sowie ein zweites Ende (23) hat; und
    f) die erste (1) und vierte (4) Lage aus dem ersten Ende (24) der optischen Faser und die zweite (2) und dritte (3) Lage aus dem zweiten Ende (23) der optischen Faser gewickelt sind; **gekennzeichnet durch** :
    g) eine fünfte Lage (5) von Windungen über der vierten Windungslage;
    h) einer sechsten Lage (6) von Windungen über der fünften Windungslage;
    i) einer siebenten Lage (7) von Windungen über der sechsten Windungslage; und
    j) einer achten Lage (8) von Windungen über der siebenten Windungslage; wobei
    k) die sechste und die siebenten Lage aus dem ersten Ende (24) der optischen Faser; und
    l) die fünfte und achte Lage aus dem zweiten Ende (23) der optischen Faser gewickelt sind.

2. Faseroptische Spule nach Anspruch 1, **dadurch gekennzeichnet,** daß die erste (1), die vierte (4), die sechste (6) sowie die siebente (7) Lage der optischen Faser (20) Windungen aufweisen, welche alle entweder im Uhrzeigersinn oder im Gegenuhrzeigersinn gewickelt sind und wobei die zweite (2), die dritte (3), die fünfte (5) sowie die achte (8) Lage optischen Faser Windungen aufweisen, die in der Gegenrichtung gewickelt sind.

**3.** Faseroptische Spule nach Anspruch 1 oder 2, **gekennzeichnet durch** ein erstes Zusatzstück (35, 42) am ersten Ende (24) sowie ein zweites Zusatzstück (36, 31) am zweiten Ende (23), wobei das erste und das zweite Zusatzstück räumlich voneinander entfernt und derart angeordnet sind, daß Phasenfehler in gegenläufig die Faser durchlaufendem Licht reduziert werden.

**4.** Faseroptische Spule nach Anspruch 1 oder 2, **dadurch gekennzeichnet,** daß die faseroptische Spule (20) einen Innenumfang sowie einen Außenumfang aufweist und ferner eine erste Anzahl von Windungen (35, 42) des ersten Endes (24) um den Außenumfang sowie eine zweite Anzahl von Windungen (36, 41) des zweiten Endes (23) um den Außenumfang gewickelt sind und wobei die ersten und zweiten Anzahlen von Windungen sowie ihre Anordnung derart gewählt sind, daß Phasenfehler in die Faser entgegengesetzt durchlaufendem Licht verringert werden.

**5.** Faseroptische Spule nach einem der vorangehenden Ansprüche, **dadurch gekennzeichnet,** daß die Spule eine ganzzahlige Anzahl von Sektionen umfaßt, wobei jede Sektion die erste (1), die zweite (2), die dritte (3), die vierte (4), die fünfte (5), die sechste (6), die siebente (7) sowie die achte (8) Lage aufweist.

**6.** Faseroptische Spule nach einem der vorangehenden Ansprüche, **gekennzeichnet durch:**

a) eine aus dem zweiten Ende (23) der optischen Faser (E) gebildeten neunte Lage (9) von Windungen, welche über der achten Windungslage (8) liegt;
b) eine aus dem ersten Ende (24) der optischen Faser gebildete zehnte Lage (10) von Windungen, welche über der neunten Windungslage (9) liegt;
c) einer aus dem ersten Ende (24) der optischen Faser gebildete elfte Lage (11) von Windungen, welche über der zehnten Windungslage (10) liegt;
d) einer aus dem zweiten Ende (23) der optischen Faser gebildete zwölfte Lage (12) von Windungen, welche über der elften Windungslage (11) liegt;
e) einer aus dem ersten Ende (24) der optischen Faser gebildete dreizehnte Lage (13) von Windungen, welche über der zwölften Windungslage (12) liegt;
f) eine aus dem zweiten Ende (23) der optischen Faser gebildete vierzehnte Lage (14) von Windungen, welche über der dreizehnten Windungslage (13) liegt;
g) einer aus dem zweiten Ende (23) der optischen Faser gebildete fünfzehnte Lage (15) von Windungen, welche über der vierzehnten Windungslage (14) liegt; und
h) einer aus dem ersten Ende (24) der optischen Faser gebildete sechzehnte Lage (16) von Windungen, welche über der fünfzehnten Windungslage (15) liegt.

**7.** Faseroptische Spule nach Anspruch 6, **dadurch gekennzeichnet,** daß die erste (1), die vierte (4), die sechste (6), die siebente (7), die zehnte (10), die elfte (11), die dreizehnte (13) sowie die sechzehnte (16) Lage Windungen enthalten, die alle entweder im Uhrzeigersinn oder im Gegenuhrzeigersinn gewickelt sind und wobei die zweite (2), die dritte (3), die fünfte (5), die achte (8), die neunte (9), die zwölfte (12), die vierzehnte (14), sowie die fünfzehnte (15) Lage Wicklungen enthalten, die alle in Gegenrichtung gewickelt sind.

**8.** Verfahren zum Wickeln einer optischen Spule mit den Schritten:

a) Bilden einer ersten Lage (1) von Windungen aus einer optischen Faser (E), welche ein erstes (24) sowie ein zweites Ende (23) aufweist;
b) Bilden einer zweiten Lage (2) von Windungen aus der optischen Faser über der ersten Windungslage;
c) Bilden einer dritten Lage (3) von Windungen aus der optischen Faser über der zweiten Windungslage;
d) Bilden einer vierten Lage (4) von Windungen aus der optischen Faser über der dritten Windungslage; wobei
e) die erste (1) sowie die vierte Lage (4) aus dem ersten Ende (24) der optischen Faser und die zweite (2) sowie die dritte Lage (3) aus dem zweiten Ende (23) der optischen Faser gewickelt sind, **gekennzeichnet durch:**
f) Bilden einer fünften Lage (5) von Windungen aus der optischen Faser über der vierten Windungslage;
g) Bilden einer sechsten Lage (6) von Windungen aus der optischen Faser über der fünften Windungslage;
h) Bilden einer siebenten Lage (7) von Windungen aus der optischen Faser über der sechsten Windungslage; und
i) Bilden einer achten Lage (8) von Windungen aus der optischen Faser über der siebenten Windungslage;
j) Wickeln der ersten Windungslage (1) aus dem ersten Ende (24) der optischen Faser (E) von einem ersten Spulenende zu einem zweiten Spulenende der optischen Spule;
k) Wickeln der zweiten Windungslage (2) aus dem zweiten Ende (23) der optischen Faser vom ersten Spulenende zum zweiten Spulenende;
l) Wickeln der dritten Windungslage (3) aus dem zweiten Ende (23) der optischen Faser vom zweiten Spulenende zum ersten Spulenende;
m) Wickeln der vierten Windungslage (4) aus dem ersten Ende (24) der optischen Faser vom zweiten Spulenende zum ersten Spulenende;
n) Wickeln der fünften Windungslage (5) aus dem zweiten Ende (23) der optischen Faser vom ersten Spulenende zum zweiten Spulenende;
o) Wickeln der sechsten Windungslage (6) aus dem ersten Ende (24) der optischen Faser vom ersten Spulenende zum zweiten Spulenende;
p) Wickeln der siebenten Windungslage (7) aus dem ersten Ende (24) der optischen Faser vom zweiten Spulenende zum ersten Spulenende; und
q) Wickeln der achten Windungslage (8) aus dem zweiten Ende (23) der optischen Faser vom zweiten Spulenende zum ersten Spulenende.

9. Verfahren nach Anspruch 8, bei dem die Windungen entweder im Uhrzeigersinn oder im Gegenuhrzeigersinn gewickelt werden und wobei die Windungen der ersten (1), der vierten (4), der sechsten (6) sowie der siebenten Lage (7) in einer der genannten Richtungen und die Windungen der zweiten (2), der dritten (3), der fünften (5) sowie der achten Lage (8) in Gegenrichtung gewickelt werden.

10. Verfahren nach Anspruch 8 oder 9, bei dem ein erstes Zusatzstück (35, 42) des ersten Endes (24) sowie ein zweites Zusatzstück (36, 41) des zweiten Endes (23) räumlich voneinander getrennt und derart angeordnet sind, daß Phasenfehler die Faser in Gegenrichtung durchlaufender Lichtstrahlen verringert werden.

11. Verfahren nach Anspruch 8 oder 9, bei dem die Spule (20) einen Außenumfang hat und eine erste Anzahl von Windungen (35, 42) des ersten Endes (35) um den Außenumfang gewickelt sind und eine zweite Anzahl von Windungen (36, 41) des zweiten Endes (23) um den Außenumfang gewickelt sind und wobei die erste und zweite Anzahl von Windungen und ihrer Anordnung so gewählt sind, daß Phasenfehler zwischen die Faser in Gegenrichtung durchlaufenden Lichtstrahlen reduziert werden.

12. Verfahren nach einem der Ansprüche 8 bis 11, **dadurch gekennzeichnet,** daß es die weiteren Schritte umfaßt:

a) Bilden einer neunten Windungslage (9) durch Wickeln des zweiten Endes (24) der optischen Faser (E) um die achte Lage (8) vom ersten Spulenende zum zweiten Spulenende;
b) Bilden einer zehnten Lage (10) von Windungen durch Wickeln des ersten Endes (24) der optischen Faser um die neunte Lage (9) vom ersten Spulenende zum zweiten Spulenende;
c) Bilden einer elften Lage (11) von Windungen durch Wickeln des ersten Endes (24) der optischen Faser um die zehnte Lage (10) vom zweiten Spulenende zum ersten Spulenende;
d) Bilden einer zwölften Lage (12) von Windungen durch Wickeln des zweiten Endes (23) der optischen Faser um die elfte Lage (11) vom zweiten Spulenende zum ersten Spulenende;
e) Bilden einer dreizehnten Lage (13) von Windungen durch Wickeln des ersten Endes (24) der optischen Faser um die zwölfte Lage (12) vom ersten Spulenende zum zweiten Spulenende;
f) Bilden einer vierzehnten Lage (14) von Windungen durch Wickeln des zweiten Endes (23) der optischen Faser um die dreizehnte Lage (13) vom ersten Spulenende zum zweiten Spulenende;
g) Bilden einer fünfzehnten Lage (15) von Windungen durch Wickeln des zweiten Endes (23) der optischen Faser um die vierzehnte Lage (14) vom zweiten Spulenende zum ersten Spulenende; und
h) Bilden einer sechzehnten Lage (16) von Windungen durch Wickeln des ersten Endes (24) der optischen Faser um die fünfzehnte Lage (15) vom zweiten Spulenende zum ersten Spulenende.

13. Verfahren nach Anspruch 12, bei dem die Windungen entweder im Uhrzeigersinn oder im Gegenuhrzeigersinn gewickelt werden und wobei die Windungen der ersten (1), der vierten (4), der sechsten (6), der siebenten (7), der zehnten (10), der elften (11), der dreizehnten (13) sowie der sechzehnten Lage (16) in der einen Wickelrichtung und die Windungen der zweiten (2), der dritten (3), der fünften (5), der achten (8), der neunten (9), der zwölften (12), der vierzehnten (14) sowie der fünfkehnten Lage (15) in Gegenrichtung gewickelt werden.

**Revendications**

1. Bobine de fibre optique comprenant:

a) une première couche (1) de spires;

b) une deuxième couche (2) de spires recouvrant ladite première couche de spires;

c) une troisième couche (3) de spires recouvrant ladite deuxième couche de spires;

d) une quatrième couche (4) de spires recouvrant ladite troisième couche de spires; dans laquelle

e) ladite bobine de fibre optique (20) est enroulée à partir d'une fibre optique (E) ayant une première (24) et une seconde (23) extrémités; et

f) lesdites première (1) et quatrième (4) couches sont enroulées à partir de ladite première extrémité (24) de ladite fibre optique et lesdites deuxième (2) et troisième (3) couches sont enroulées à partir de ladite seconde extrémité (23) de ladite fibre optique; caractérisée par:

g) une cinquième couche (5) de spires recouvrant ladite quatrième couche de spires;

h) une sixième couche (6) de spires recouvrant ladite cinquième couche de spires;

i) une septième couche (7) de spires recouvrant ladite sixième couche de spires; et,

j) une huitième couche (8) de spires recouvrant ladite septième couche de spires; dans laquelle

k) lesdites sixième et septième couches sont enroulées à partir de ladite première extrémité (24) de ladite fibre optique; et

l) lesdites cinquième et huitième couches sont enroulées à partir de ladite seconde extrémité (23) de ladite fibre optique.

2. Bobine de fibre optique selon la revendication 1, caractérisée en ce que lesdites première (1), quatrième (4), sixième (6) et septième (7) couches de ladite bobine de fibre optique (20) sont constituées de spires qui sont enroulées en totalité soit dans le sens des aiguilles d'une montre soit dans le sens inverse des aiguilles d'une montre et dans laquelle lesdites deuxième (2), troisième (3), cinquième (5) et huitième (8) couches de ladite bobine de fibre optique sont constituées de spires qui sont enroulées en totalité dans l'autre desdits sens.

3. Bobine de fibre optique selon la revendication 1 ou 2, caractérisée par une première longueur supplémentaire (35, 42) de ladite première extrémité (24) et une seconde longueur supplémentaire (36, 41) de ladite seconde extrémité (23), lesdites première et seconde longueurs supplémentaires étant espacées l'une de l'autre et étant disposées de façon que l'erreur entre les phases du rayonnement se propageant à contre-courant à travers ladite fibre soit réduite.

4. Bobine de fibre optique selon la revendication 1 ou 2, caractérisée en ce que ladite bobine de fibre optique (20) présente un périmètre interne et un périmètre externe, et dans laquelle ladite bobine de fibre optique comprend, en outre, un premier nombre de spires (35, 42) de ladite première extrémité (24) enroulées autour dudit périmètre externe et un second nombre de spires (36, 41) de ladite seconde extrémité (23) enroulées autour dudit périmètre externe, lesdits premier et second nombres de spires et l'emplacement desdits premier et second nombres de spires étant choisis pour réduire l'erreur entre les phases du rayonnement se propageant à contre-courant à travers ladite fibre.

5. Bobine de fibre optique selon l'une des revendications précédentes, caractérisée en ce que ladite bobine présente un nombre entier de sections, chaque section comprenant lesdites première (1), deuxième (2), troisième (3), quatrième (4), cinquième (5), sixième (6), septième (7) et huitième (8) couches.

6. Bobine de fibre optique selon l'une des revendications précédentes, caractérisée par:

a) une neuvième couche (9) de spires formée de ladite seconde extrémité (23) de ladite fibre optique (E), ladite neuvième couche de spires recouvrant ladite huitième couche (8) de spires;

b) une dixième couche (10) de spires formée de ladite première extrémité (24) de ladite fibre optique, ladite dixième couche de spires recouvrant ladite neuvième couche (9) de spires;

c) une onzième couche (11) de spires formée de ladite première extrémité (24) de ladite fibre optique, ladite onzième couche de spires recouvrant ladite dixième couche (10) de spires;

d) une douzième couche (12) de spires formée de ladite seconde extrémité (23) de ladite fibre optique, ladite douzième couche de spires recouvrant ladite onzième couche (11) de spires;

e) une treizième couche (13) de spires formée de ladite première extrémité (24) de ladite fibre optique, ladite treizième couche de spires recouvrant ladite douzième couche (12) de spires;

f) une quatorzième couche (14) de spires formée de ladite seconde extrémité (23) de ladite fibre optique, ladite quatorzième couche de spires recouvrant ladite treizième couche (13) de spires;

g) une quinzième couche (15) de spires formée de ladite seconde extrémité (23) de ladite fibre optique, ladite quinzième couche de spires recouvrant ladite quatorzième couche (14) de spires; et

h) une seizième couche (16) de spires formée de ladite première extrémité (24) de ladite fibre optique, ladite seizième couche de spires recouvrant ladite quinzième couche (15) de spires.

7. Bobine de fibre optique selon la revendication 6, caractérisée en ce que lesdites première (1), quatrième (4), sixième (6), septième (7), dixième (10), onzième (11), treizième (13) et seizième (16) couches sont constituées de spires qui sont enroulées en totalité soit dans le sens des aiguilles d'une montre soit dans le sens inverse des aiguilles d'une montre et dans laquelle lesdites deuxième (2), troisième (3), cinquième (5), huitième (8), neuvième (9), douzième (12), quatorzième (14) et quinzième (15) couches sont constituées de spires qui sont enroulées en totalité dans l'autre desdits sens.

8. Procédé d'enroulement d'une bobine optique comprenant les étapes de:

a) formation d'une première couche (1) de spires à partir d'une fibre optique (E) ayant une première (24) et une seconde (23) extrémités;
b) formation d'une deuxième couche (2) de spires à partir de ladite fibre optique en recouvrant ladite première couche de spires;
c) formation d'une troisième couche (3) de spires à partir de ladite fibre optique en recouvrant ladite deuxième couche de spires;
d) formation d'une quatrième couche (4) de spires à partir de ladite fibre optique en recouvrant ladite troisième couche de spires; dans lequel
e) lesdites première (1) et quatrième (4) couches sont enroulées à partir de ladite première extrémité (24) de ladite fibre optique et lesdites deuxième (2) et troisième (3) couches sont enroulées à partir de ladite seconde extrémité (23) de ladite fibre optique; caractérisé par:
f) la formation d'une cinquième couche (5) de spires à partir de ladite fibre optique en recouvrant ladite quatrième couche de spires;
g) la formation d'une sixième couche (6) de spires à partir de ladite fibre optique en recouvrant ladite cinquième couche de spires;
h) la formation d'une septième couche (7) de spires à partir de ladite fibre optique en recouvrant ladite sixième couche de spires; et,
i) la formation d'une huitième couche (8) de spires à partir de ladite fibre optique en recouvrant ladite septième couche de spires;
j) l'enroulement de ladite première couche (1) de spires à partir d'une première extrémité (24) de ladite fibre optique (E) depuis une première extrémité de bobine vers une seconde extrémité de bobine de la bobine optique;
k) l'enroulement de ladite deuxième couche (2) de spires à partir d'une seconde extrémité (23) de ladite fibre optique depuis ladite première extrémité de bobine vers ladite seconde extrémité de bobine;
l) l'enroulement de ladite troisième couche (3) de spires à partir de ladite seconde extrémité (23) de ladite fibre optique depuis ladite seconde extrémité de bobine vers ladite première extrémité de bobine;
m) l'enroulement de ladite quatrième couche (4) de spires à partir de ladite première extrémité (24) de ladite fibre optique depuis ladite seconde extrémité de bobine vers ladite première extrémité de bobine;
n) l'enroulement de ladite cinquième couche (5) de spires à partir de ladite seconde extrémité (23) de ladite fibre optique depuis ladite première extrémité de bobine vers ladite seconde extrémité de bobine;
o) l'enroulement de ladite sixième couche (6) de spires à partir de ladite première extrémité (24) de ladite fibre optique depuis ladite première extrémité de bobine vers ladite seconde extrémité de bobine;
p) l'enroulement de ladite septième couche (7) de spires à partir de ladite première extrémité (24) de ladite fibre optique depuis ladite seconde extrémité de bobine vers ladite première extrémité de bobine; et
q) l'enroulement de ladite huitième couche (8) de spires à partir de ladite seconde extrémité (23) de ladite fibre optique depuis ladite seconde extrémité de bobine vers ladite première extrémité de bobine.

9. Procédé selon la revendication 8, dans lequel lesdites spires peuvent être enroulées soit dans le sens des aiguilles d'une montre soit dans le sens inverse des aiguilles d'une montre et dans lequel lesdites spires desdites première (1), quatrième (4), sixième (6) et septième (7) couches sont enroulées dans l'un desdits sens et lesdites spires desdites deuxième (2), troisième (3), cinquième (5) et huitième (8) couches sont enroulées dans l'autre desdits sens.

10. Procédé selon la revendication 8 ou 9, dans lequel une première longueur supplémentaire (35, 42) de ladite première extrémité (24) et une seconde longueur supplémentaire (36, 41) de ladite seconde extrémité (23) sont espacées l'une de l'autre et sont disposées de façon que l'erreur entre les phases du rayonnement circulant à contre-courant à travers ladite fibre soit réduite.

**11.** Procédé selon la revendication 8 ou 9, dans lequel ladite bobine (20) présente un périmètre externe et dans lequel un premier nombre de spires (35, 42) de ladite première extrémité (24) est enroulé autour dudit périmètre externe et un second nombre de spires (36, 41) de ladite seconde extrémité (23) est enroulé autour dudit périmètre externe, lesdits premier et second nombres de spires et l'emplacement desdits premier et second nombres de spires étant choisis pour réduire l'erreur entre les phases du rayonnement circulant à contre-courant à travers ladite fibre.

**12.** Procédé selon l'une des revendications 8 à 11, caractérisé en ce que ledit procédé comprend, en outre, les étapes de:

a) formation d'une neuvième couche (9) de spires par enroulement de ladite seconde extrémité (23) de ladite fibre optique (E) autour de ladite huitième couche (8) depuis ladite première extrémité de bobine vers ladite seconde extrémité de bobine;

b) formation d'une dixième couche (10) de spires par enroulement de ladite première extrémité (24) de ladite fibre optique autour de ladite neuvième couche (9) depuis ladite première extrémité de bobine vers ladite seconde extrémité de bobine;

c) formation d'une onzième couche (11) de spires par enroulement de ladite première extrémité (24) de ladite fibre optique autour de ladite dixième couche (10) depuis ladite seconde extrémité de bobine vers ladite première extrémité de bobine;

d) formation d'une douzième couche (12) de spires par enroulement de ladite seconde extrémité (23) de ladite fibre optique autour de ladite onzième couche (11) depuis ladite seconde extrémité de bobine vers ladite première extrémité de bobine;

e) formation d'une treizième couche (13) de spires par enroulement de ladite première extrémité (24) de ladite fibre optique autour de ladite douzième couche (12) depuis ladite première extrémité de bobine vers ladite seconde extrémité de bobine;

f) formation d'une quatorzième couche (14) de spires par enroulement de ladite seconde extrémité (23) de ladite fibre optique autour de ladite treizième couche (13) depuis ladite première extrémité de bobine vers ladite seconde extrémité de bobine;

g) formation d'une quinzième couche (15) de spires par enroulement de ladite seconde extrémité (23) de ladite fibre optique autour de ladite quatorzième couche (14) depuis ladite seconde extrémité de bobine vers ladite première extrémité de bobine; et

h) formation d'une seizième couche (16) de spires par enroulement de ladite première extrémité (24) de ladite fibre optique autour de ladite quinzième couche (15) depuis ladite seconde extrémité de bobine vers ladite première extrémité de bobine.

**13.** Procédé selon la revendication 12, dans lequel lesdites spires peuvent être enroulées soit dans le sens des aiguilles d'une montre soit dans le sens inverse des aiguilles d'une montre et dans lequel lesdites spires desdites première (1), quatrième (4), sixième (6), septième (7), dixième (10), onzième (11), treizième (13) et seizième (16) couches sont enroulées dans l'un desdits sens et lesdites spires desdites deuxième (2), troisième (3), cinquième (5), huitième (8), neuvième (9), douzième (12), quatorzième (14) et quinzième (15) couches sont enroulées dans l'autre desdits sens.

**Fig. 1**

PRIOR ART

EP 0 614 518 B1

Fig. 2

EP 0 614 518 B1

EP 0 614 518 B1

40

- + + - + - - +

8 7 6 5 4 3 2 1

1 2 3 4 5 6 7 8

Fig. 3

Fig. 4

Fig. 5

| LAYER L | (2i-M-1) | RELATIVE Ṫ FACTOR | LAYER ERROR | QUAD ERROR | OCT ERROR |
|---|---|---|---|---|---|
| 1 | -15 | 0 | 0 | | |
| 16 | 15 | 1 | 15 | +28 | |
| 15 | 13 | 1 | 13 | | |
| 2 | -13 | 0 | 0 | | +8 |
| 14 | 11 | 0 | 0 | | |
| 3 | -11 | 1 | -11 | -20 | |
| 4 | -9 | 1 | -9 | | |
| 13 | 9 | 0 | 0 | | |
| 12 | 7 | 0 | 0 | | |
| 5 | -7 | 1 | -7 | -12 | |
| 6 | -5 | 1 | -5 | | |
| 11 | 5 | 0 | 0 | | -8 |
| 7 | -3 | 0 | 0 | | |
| 10 | 3 | 1 | 3 | +4 | |
| 9 | 1 | 1 | 1 | | |
| 8 | -1 | 0 | -1 | | |

$\dot{T}_1$   $\dot{T}_2$

$\Delta \dot{T} = \dot{T}_2 - \dot{T}_1$

$\Omega_e = 0$

*Fig. 6*

19

| LAYER | (2i−M−1) | RELATIVE † FACTOR | LAYER ERROR | QUAD ERROR | OCT ERROR |
|---|---|---|---|---|---|
| 1 | −15 | 1 | −15 | | |
| 16 | 15 | 2 | 30 | | |
| 15 | 13 | 3 | 39 | +2 | |
| 2 | −13 | 4 | −52 | | O |
| 14 | 11 | 5 | 55 | | |
| 3 | −11 | 6 | −66 | −2 | |
| 4 | −9 | 7 | −63 | | |
| 13 | 9 | 8 | 72 | | |
| 12 | 7 | 9 | 63 | | |
| 5 | −7 | 10 | −70 | −2 | |
| 6 | −5 | 11 | −55 | | |
| 11 | 5 | 12 | 60 | | O |
| 7 | −3 | 13 | −39 | | |
| 10 | 3 | 14 | 42 | +2 | |
| 9 | 1 | 15 | 15 | | |
| 8 | −1 | 16 | −16 | | |

$\Omega_e = 0$

*Fig. 7*

*Fig. 8*